# EUROPEAN PATENT APPLICATION

(11) **EP 4 755 633 A1**
(43) Date of publication of application: **10.06.2026**
(21) Application number: 24307015.8
(22) Date of filing: 03.12.2024
(51) Int. Cl.: B32B 37/10, B42D 25/455, B42D 25/46, B30B 15/06

(54) **METHOD FOR MANUFACTURING AT LEAST ONE PRODUCT**

(71) Applicant: THALES DIS FRANCE SAS, 92190 Meudon (FR)
(72) Inventor: MÖKSY, Jukka, 01600 Vantaa (FI); NURMINEN, Manu, 00350 Helsinki (FI); COURBET, Stephane, 81-738 Sopot (PL); SZOLA, Przemyslaw, 83-112 Lubiszewo Tczewskie (PL)
(74) Representative: Castelo, Jérôme

(57) **Abstract**

A method for manufacturing at least one product comprises cutting 12 at least one lamination plate into at least two lamination stripes 21, 22, 23, 24 and 25, each of the at least two lamination stripes being associated with at least one of the at least one product to be laminated 211, 212, 213 and 214.

## Description

### Field of the invention:

The invention relates generally to a method for manufacturing at least one product.

The product(s) may include one or several data carriers, such as IDentity (or ID) cards or data pages. Each data page may be included within a security document, like e.g., a passport.

### State of the art:

It is known to use two lamination plates for a lamination of several products. The products to be laminated are positioned and distributed on a lower lamination plate. The products to be laminated are then sandwiched between two lamination plates comprising the lower lamination plate and an upper lamination plate before a lamination operation.

However, if a lamination plate has a lack of flatness and has therefore some surface defects, then such a flatness imperfection leads to issues in the resulting yield products. The flatness imperfection generates some loss of time and costs in processing the lamination plates which may be scrapped or discarded after the lamination operation.

There is a need of a solution that allows improving the quality of the products that have been laminated with respect to such a known solution.

### Summary of the invention:

The invention proposes a solution for satisfying the just herein above specified need by providing a method for manufacturing at least one product.

According to the invention, the method comprises cutting at least one lamination plate into at least two lamination stripes, each of the at least two lamination stripes being associated with at least one of the at least one product to be laminated.

The principle of the invention consists in adding, prior to a step of laminating products, a step of cutting one, two or more lamination plates among the lamination plates that are intended to surround or sandwich one or several products to be laminated.

Such a lamination plate cutting allows dividing the concerned lamination plate(s) into corresponding lamination stripes, as smaller lamination plates.

A size of an original lamination plate(s) is thereby reduced into a smaller size of corresponding resulting lamination stripes.

At least one dimension of an original lamination plate(s) is thus, after the lamination plate cutting step, reduced into one or several smaller dimensions.

Such a lamination plate size or dimension reduction allows increasing the mechanical flexibility of each resulting lamination stripe with respect to the mechanical flexibility of the original lamination plate.

The resulting lamination stripes, as smaller lamination plates, have, each, a mechanical flexibility that is greater than the corresponding original lamination plate (i.e. prior to undergoing one or several cuttings). A lamination step of the product(s) to be laminated that is(are) surrounded by at least one lamination stripe (at at least one side of the product(s)) is subsequently carried out while allowing each product to be laminated to undergo a pressure that is better distributed and more uniform and homogeneous than using two lamination plates (one lamination plate at each side of the product(s)).

With respect to the above described prior art solution, a corresponding lamination cassette in which each of the product(s) to be laminated is sandwiched by using one or two lamination stripes with one lamination stripe per side allows providing a better quality of products than using two lamination plates.

The invention solution allows thereby improving the quality of the lamination of the product(s) obtained after the lamination step that uses at least one lamination stripe.

The invention solution thus allows increasing the yield of good products obtained after the lamination step.

Moreover, the invention solution allows reducing the time and therefore the cost in processing the lamination plates (which would otherwise generate a bad quality of products).

The invention solution is simple, cheap and efficient to implement while avoiding to scrap or discard a lamination plate(s).

### Brief description of the drawings:

Additional features and advantages of the invention will be apparent from a detailed description of a preferred embodiment of the invention, given as an indicative and non-limitative example, in conjunction with the following drawings:
- Figure 1 is a simplified diagram of an embodiment of a method for manufacturing of one or several products, that includes a step of cutting one or two lamination plates, among the ones that are intended to sandwich the product(s) to be laminated, into laminations stripes, according to the invention;
- Figure 2 shows a top view of a lamination plate that has been cut, according to the method of figure 1, into a plurality of lamination stripes, each lamination stripe being associated with one or several products to be laminated; and
- Figure 3 represents a side view of a lamination cassette that has been built using the lamination stripes of figure 2, according to the invention, so as to provide a good quality of products resulting from a lamination step using at least one bordering lamination stripe per product side.

### Detailed description:

Herein under is considered a case in which the invention method for manufacturing at least one product is implemented for manufacturing two or more data pages, as products.

Naturally, the herein below described embodiment is only for exemplifying purposes and is not considered to reduce the scope of the invention.

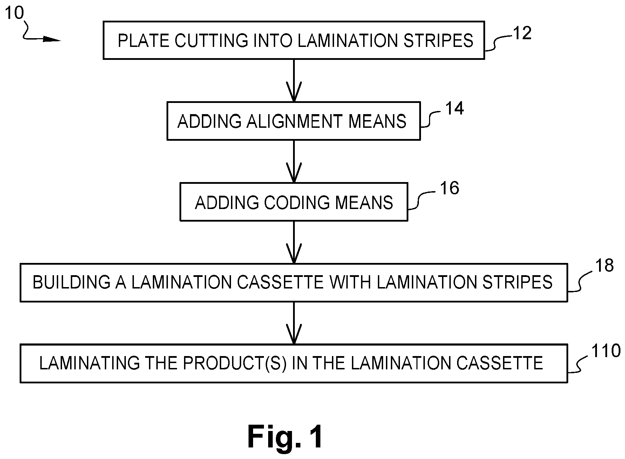

**Figure 1** depicts schematically a method 10 for manufacturing e.g., data pages, as data carriers and products.

According to an essential feature of the invention, the method 10 includes a step 12 of cutting one or several lamination plates into two or more lamination stripes.

The lamination plate cutting step 12 allows building a lamination cassette in which each of products to be laminated is sandwiched using one or two lamination stripes.

The lamination plate cutting step 12 may take into account the dimensions of the products to be laminated.

The lamination plate(s) is(are) e.g., in metal.

The lamination plate cutting step 12 may include one or several cuttings of the lamination plate(s) by using:
- one or several blades; and/or
- one or several laser beams.

The lamination plate cutting step 12 may include one or several cuttings of the lamination plate(s):
- in a horizontal manner;
- in a vertical manner; and/or
- in a height manner.

The lamination plate cutting step 12 may be thus carried out in a one dimension (or 1D), a two dimension (or 2D) or a three dimension (or 3D) manner.

Each lamination plate that is cut is thus divided into two or more lamination stripes.

The lamination stripes that result from the lamination plate cutting have, each, one or several dimensions that are reduced with respect to the corresponding dimensions of the original lamination plate.

The lamination plate to be positioned, within a lamination cassette, below or above the product(s) to be laminated may be cut into two or more lamination stripes.

Each lamination stripe is to be associated with one or several products to be laminated.

A corresponding resulting lamination stripe may constitute a lamination stripe that is to be positioned at a side of one or several products to be laminated, e.g., below or above.

The use of each lamination stripe allows distributing, during a lamination operation, a pressure in a uniform and homogeneous manner, on the lamination stripe and therefore on the product(s) that is(are) associated with the lamination stripe. Such a pressure distribution on a lamination stripe is better than a pressure distribution on an original lamination plate.

One or several lamination stripes and/or one or several elements comprised in a lamination cassette to be built are preferably provided with alignment means, as a step 14 of adding alignment means.

The alignment means allows controlling a positioning of one or several lamination stripes with respect to the other lamination stripes on a lamination cassette to be built.

The alignment means includes mechanical means, like e.g., holes, pins and/or corner jigs. The holes may include a circular hole(s) and/or an oblong hole(s).

The alignment means is used for aligning the lamination stripe(s) with respect to (an)other lamination stripe(s) to be positioned on a lamination cassette to be built (i.e. before a product laminating step).

According to a particularly advantageous embodiment, the step 12 of cutting the lamination plate(s) into two or more lamination stripes and the step of adding, at one or several lamination stripes, alignment means are both carried out in one and the same operation.

Then, the method 10 may further include a step 16 of adding, at one or several lamination stripes, coding means.

One or several lamination stripes and/or one or several elements comprised in a lamination cassette to be built are preferably provided with coding means.

The coding means includes mechanical means, such as one or several slotted holes.

The coding means allows arranging each of the lamination stripes in front of the right lamination stripe (or the right lamination plate (when not previously cut)), i.e. e.g., above a right lower lamination stripe, on the lamination cassette to be built.

A pressure to be exerted during a product laminating step is, thanks to the arrangement, effectively exerted on the product(s) associated with the concerned lamination stripe which e.g., supports, as a lower lamination stripe, the concerned product(s).

According to a particularly advantageous embodiment, the step 12 of cutting the lamination plate(s) into two or more lamination stripes, the step of adding, at one or several lamination stripes, alignment means and the step of adding 16, at one or several lamination stripes, coding means are all carried out in one and the same operation.

Once the lamination stripes have been obtained and provided preferably with alignment means and/or coding means, the method 10 further comprises a step of building 18 a lamination cassette.

An operator and/or a robot build(s) 18 a lamination cassette using the lamination stripes. Such a lamination cassette building operation is easy since each used lamination stripe is, instead of the original lamination plate, lighter to lift, place and position in the lamination cassette to be formed or built.

The step of building 18 a lamination cassette includes preferably aligning, thanks to the alignment means, each lamination stripe in a parallel manner with respect to (an)other of the lamination stripe(s) that is(are) used for building the lamination cassette.

According to a preferred and advantageous embodiment, the method 10 includes a step of laminating 110 the products in the lamination cassette. Such a product laminating step consists of using a press to exert a pressure on one side, through one or several lamination stripes, and on other side, through either one or several lamination stripes or a lamination plate (that has not undergone any cutting step), on each product to be laminated.

The (or another) operator and/or the (or another) robot disassemble(s) the lamination cassette after the lamination operation.

Such a lamination cassette disassembling operation is easy since each used lamination stripe is, instead of the original lamination plate, lighter to lift and extract.

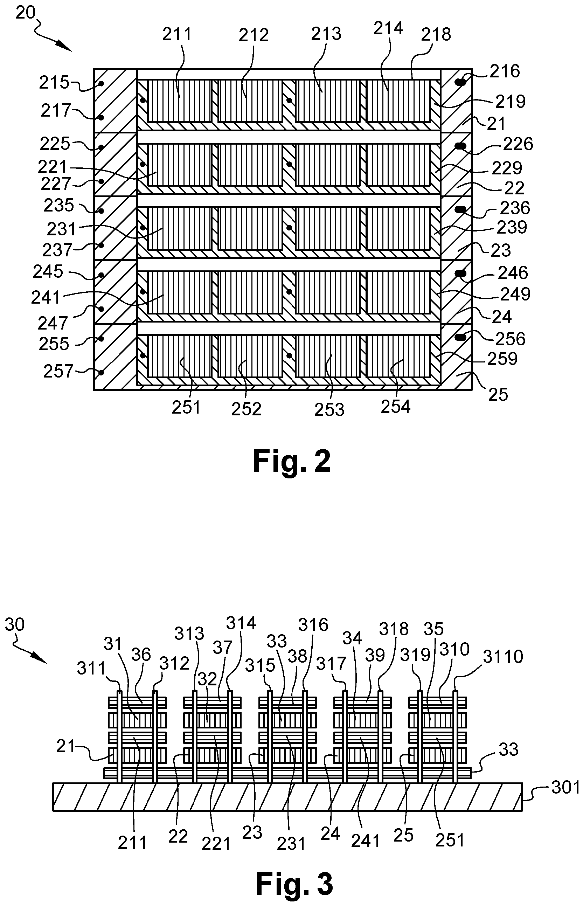

**Figure 2** represents a given example of a lamination plate that has been cut into a plurality of lamination stripes that are, each, associated with a plurality of products to be laminated.

In the described example, the lamination plate has been previously divided or cut into e.g., five lamination stripes 21, 22, 23, 24 and 25.

The lamination plate has e.g., a rectangular form, or any other form.

The dimensions of the lamination plate are e.g., 740 mm *560 mm.

The dimensions of the lamination plate may be included e.g., in a range of 300-1300 mm * 100-750 mm, typically in a range of 600-800 mm*450-600 mm, and preferably in a range of 700-800 mm * 540-580 mm.

The width of the lamination plate has been cut into e.g., five, while taking account of e.g., the width of the data pages.

The total number, e.g., 20, of the data pages are, instead of being associated with a complete original lamination plate, associated with the e.g., 5 lamination stripes 21, 22, 23, 24 and 25.

Each lamination stripe 21, 22, 23, 24 or 25 has e.g., a rectangular form, or any other form.

The dimensions of each lamination stripe 21, 22, 23, 24 or 25 are e.g., 740 mm * 110 mm. The dimensions of each lamination stripe may be included e.g., in a range of 150-650 mm * 50-375 mm, typically in a range of 300-400 mm * 225-300 mm, and preferably in a range of 700-800 mm * 100-120 mm.

The small size/dimension(s) of each of the lamination stripes (with respect to the original lamination plate) brings or offers (more) flexibility in its handling/processing notably for the lamination operation.

Each lamination stripe 21, 22, 23, 24 or 25 is associated with e.g., four data pages to be laminated 211, 212, 213 and 214, 221, 222, 223 and 224, 231, 232, 233 and 234, 241, 242, 243 and 244, or 251, 252, 253 and 254 respectively.

The e.g., four data pages to be laminated that are associated with each lamination stripe 21, 22, 23, 24 or 25, are e.g., mounted above e.g., a plastic layer 219, 229, 239, 249 or 259 respectively. Each plastic layer 219, 229, 239, 249 or 259 is to be laminated with each of the e.g., four data pages associated with the corresponding lamination stripe 21, 22, 23, 24 or 25.

The e.g., four data pages to be laminated that are associated with each lamination stripe 21, 22, 23, 24 or 25, support e.g., a layer 218, 228, 238, 248 or 258 respectively.

Each layer 218, 228, 238, 248 or 258 constitutes e.g., a hinge and is also to be laminated with each of the e.g., four data pages associated with the corresponding lamination stripe 21, 22, 23, 24 or 25.

Each data page to be laminated has e.g., a rectangular form, or any other form.

The dimensions of each data page are e.g., 125 mm * 85 mm. The dimensions of each data page may be typically included e.g., in a range of 120-150 mm * 80-120 mm.

Each lamination stripe 21, 22, 23, 24 or 25 is preferably provided with alignment means, such as two holes 215 and 216, 225 and 226, 235 and 236, 245 and 246 or 255 and 256 respectively.

The two holes 215 and 216, 225 and 226, 235 and 236, 245 and 246 or 255 and 256 include e.g., one circular or round hole 215, 225, 235, 245 or 255 and e.g., an oblong hole 216, 226, 236, 246 or 256.

The alignment means allows having more accuracy in the alignment of the lamination stripe with respect to another lamination stripe or a lamination plate that is to be positioned e.g., above the data pages that are supported by the concerned lamination stripe that is e.g., below the data pages.

The alignment means allows controlling thus a positioning of the lamination stripe with respect to (an)other lamination stripe and/or a lamination plate that is(are) to be positioned in the environment of the lamination stripe in a corresponding lamination cassette to be assembled or built.

One or several lamination stripes may be independently controlled and replaced, each, by another lamination stripe, if needed.

For instance, if the original lamination plate is associated with e.g., 20, data pages while e.g., 5, corresponding resulting lamination stripes (after the cutting step) are used and that are, each, associated with e.g., 4 data pages, then only one lamination stripe 21, 22, 23, 24 or 25 may be replaced if the concerned lamination stripe is defective.

Such a lamination stripe replacement operation is easy since each used lamination stripe is, instead of the original lamination plate, lighter to handle.

Furthermore, such a lamination stripe replacement (instead of a lamination plate replacement) allows saving time and therefore cost in processing the lamination stripes.

Accordingly, the quality of the lamination stripe may be improved with respect to the quality of an original lamination plate by reducing the imperfections, such as a scratch(es), a dent(s) and/or other tear/wear issues.

Each lamination stripe 21, 22, 23, 24 or 25 is preferably provided with coding means, such as a hole 217, 227, 237, 247 or 257.

The coding means allows avoiding to position a wrong lamination stripe e.g., above the concerned lamination stripe, and thus using the right lamination stripe above the concerned lamination stripe during a corresponding lamination cassette building or assembling operation. Thus, each associated data page has e.g., above and below the right lamination stripe (or lamination plate). The right lamination operation may therefore occur on both sides of the concerned data page.

The e.g., four data pages that are associated with a first lamination stripe among the lamination stripes may constitute a first type of products to be laminated while other e.g., four data pages that are associated with a second lamination stripe may constitute a second type of products to be laminated that is distinct from the first type of products to be laminated.

**Figure 3** represents a given example of a lateral view of a corresponding lamination cassette 30 using the lamination stripes, seen from their left.

The lamination cassette includes e.g., 6 levels or stages.

A cassette base 301 is provided with e.g., two pins, for each of e.g., five pairs of lamination stripes, namely a lower lamination stripe and an upper lamination stripe per pair, 311 and 312, 313 and 314, 315 and 316, 317 and 318 or 319 and 3110 respectively.

The two pins 311 and 312, 313 and 314, 315 and 316, 317 and 318 or 319 and 3110 allow positioning and arranging the different elements to be assembled within a lamination cassette to be built.

The pins 311-3110 cooperate with corresponding holes that are provided in each element to be involved for assembling or building a corresponding lamination cassette.

As elements from bottom to top, there are, as a first level, the cassette base 301, as a second level, a lower lamination pad 33, as a third level and lower lamination stripes, the e.g., five, lamination stripes 21-25, as a fourth level, and the first data page associated with each lamination stripe 211, 221, 231, 241 and 251, as a fifth level and upper lamination stripes, the e.g., five, lamination stripes 31, 32, 33, 34 and 35 and, as a sixth level and upper lamination pads, the e.g., five lamination pads 36, 37, 38, 39 and 310.

Each of the upper lamination stripes is substantially parallel to a corresponding lower lamination stripe.

The lower lamination pad 33 has e.g., not been previously cut while the upper lamination pad has been previously cut into the e.g., five lamination pads 36-310.

The lower and upper lamination pads allow distributing evenly the pressure to an area covering each of the data pages during the lamination operation.

The invention solution allows thereby improving the quality of the lamination of the data pages, as products, obtained after the lamination operation that uses one or more lamination stripes.

The invention solution thus allows increasing the yield of good products obtained after the lamination.

The invention solution is simple, cheap and efficient to implement.

The invention solution is applicable to manufacture notably a Driving License (or DL) and/or ID card(s).

## Claims

1. A method (10) for manufacturing at least one product, comprising cutting (12) at least one lamination plate into at least two lamination stripes (21, 22, 23, 24 and 25), each of the at least two lamination stripes being associated with at least one of the at least one product to be laminated (211, 212, 213 and 214).

2. The method according to claim 1, wherein the step of cutting at least one of the at least two lamination plates into at least two lamination stripes includes at least one cutting the at least one of the at least two lamination plates using at least one blade.

3. The method according to any previous claim, wherein the step of cutting at least one of the at least two lamination plates into at least two lamination stripes includes at least one cutting the at least one of the at least two lamination plates using at least one laser stream.

4. The method according to any previous claim, wherein the step of cutting at least one of the at least two lamination plates into at least two lamination stripes includes at least one cutting of the at least one of the at least two lamination plates in a horizontal manner.

5. The method according to any previous claim, wherein the step of cutting at least one of the at least two lamination plates into at least two lamination stripes includes at least one cutting of the at least one of the at least two lamination plates in a vertical manner.

6. The method according to any previous claim, wherein the method further comprises adding (14), at at least one of the at least two lamination stripes and/or at a lamination cassette building, alignment means (215 and 216), the alignment means allowing to control a positioning of at least one of the at least two lamination stripes with respect to the other of the at least two lamination stripes on the lamination cassette to be built.

7. The method according to claim 6, wherein the step of cutting at least one of the at least two lamination plates into at least two lamination stripes and the step of adding, at at least one of the at least two lamination stripes, alignment means are carried out in one and the same operation.

8. The method according to any previous claim, wherein the method further comprises a step of building (18) a lamination cassette using the at least two lamination stripes.

9. The method according to claim 8, wherein the step of building a lamination cassette includes aligning, thanks to the alignment means, each of the at least two lamination stripes in a parallel manner relative to at least one other of the at least two lamination stripes.

10. The method according to claim 8 or 9, wherein, prior to the step of building a lamination cassette, the method further comprises a step of adding (16), at at least one of the at least two lamination stripes, coding means, the coding means allowing to arrange the at least one of the at least two lamination stripes in front of the right lamination stripe on the lamination cassette to be built.
